# EUROPEAN PATENT APPLICATION

(11) **EP 1 329 673 A1**
(43) Date of publication of application: **23.07.2003**
(21) Application number: 03000699.3
(22) Date of filing: 17.01.2003
(51) Int. Cl.: F24H 8/00

(54) **Condensing boiler with means for reheating the exhaust gas, particularly for home system**

(30) Priority: 18.01.2002 IT MN20020001
(71) Applicant: UNICAL AG S.p.A., 46033 Castel d'Ario (Mantova) (IT)
(72) Inventor: Jahier, Giovanni, 46033 Casteldario (Prov. of Mantova) (IT)
(74) Representative: Modiano, Guido, Dr.-Ing.

(57) **Abstract**

A condensing boiler particularly for a home system, comprising a burner (1) and a gas-water heat exchanger (3) in which heat is transferred to the water of the system by the gases, so that the gases reach a temperature below the dew point, comprising means (6) adapted to reheat the gases at the exit of the exchanger (3), before sending them to the flue, so as to return the gases to a temperature above the dew point.

## Description

The invention relates to a condensing boiler particularly for a home system.

It is known that in the field of boilers intended to generate heat, which is used particularly in home systems to heat the water of the heating system and optionally to generate hot water for sanitary uses, so-called "condensing" boilers are particularly widespread.

In these boilers, the combustion gases are sent to a gas-water heat exchanger, in which part of the water vapor contained in the gases is condensed, consequently transferring to the water from the gases not only the sensible heat but also part of the latent heat of said water vapor.

This produces high efficiencies, but there is the severe risk of condensation, on the cold walls of the flue, of the water vapor that is still contained in the gases that exit from the boiler at a temperature below the dew point.

The aim of the present invention is therefore to provide a condensing boiler that allows to avoid the risk of forming condensation within the flue.

The proposed aim is achieved by a condensing boiler particularly for a home system, according to the invention, which comprises a burner contained in a combustion chamber and a gas-water heat exchanger in which heat is transferred to the water of the system by the gases, so that said gases reach a temperature below the dew point, characterized in that it comprises means adapted to heat the gases at the exit of the gas-water exchanger before sending them to the flue, so as to return said gases to a temperature above the dew point.

Further characteristics and advantages of the invention will become better apparent from the description of some preferred but not exclusive embodiments thereof, illustrated only by way of non-limitative example in the accompanying drawings, wherein:
Figures 1, 2 and 3 are three diagrams of boilers according to the invention;
Figure 4 is a view of another embodiment of the boiler according to the diagram of Figure 1;
Figure 5 is a sectional view, taken along the line V-V of Figure 4.

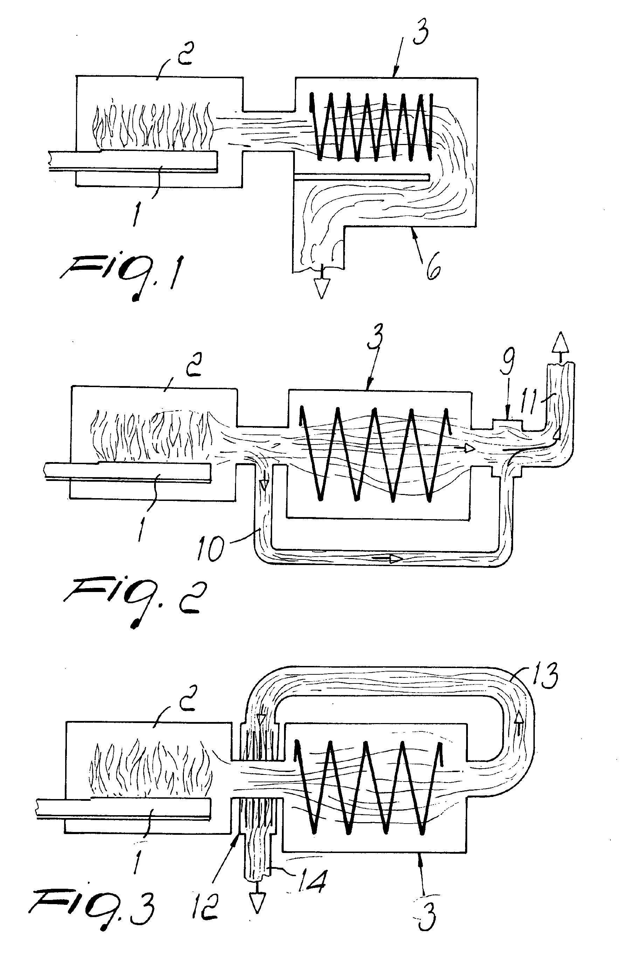

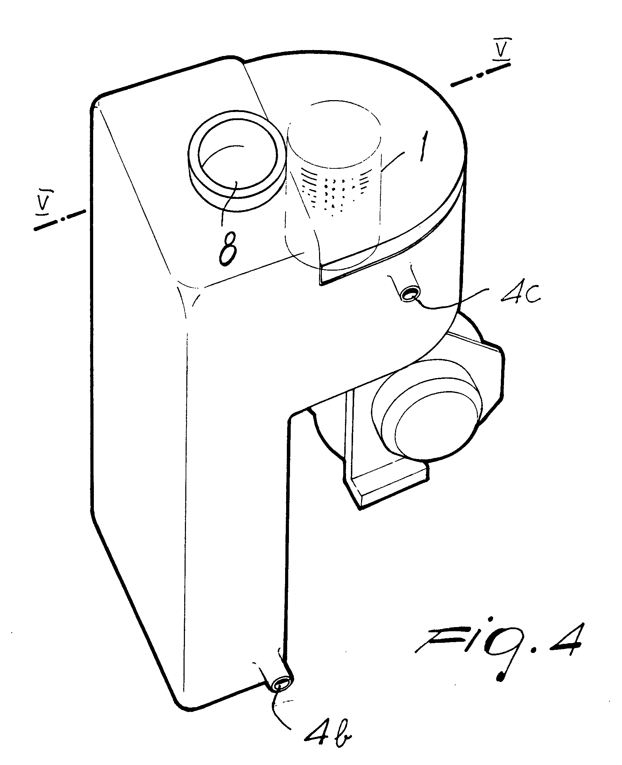

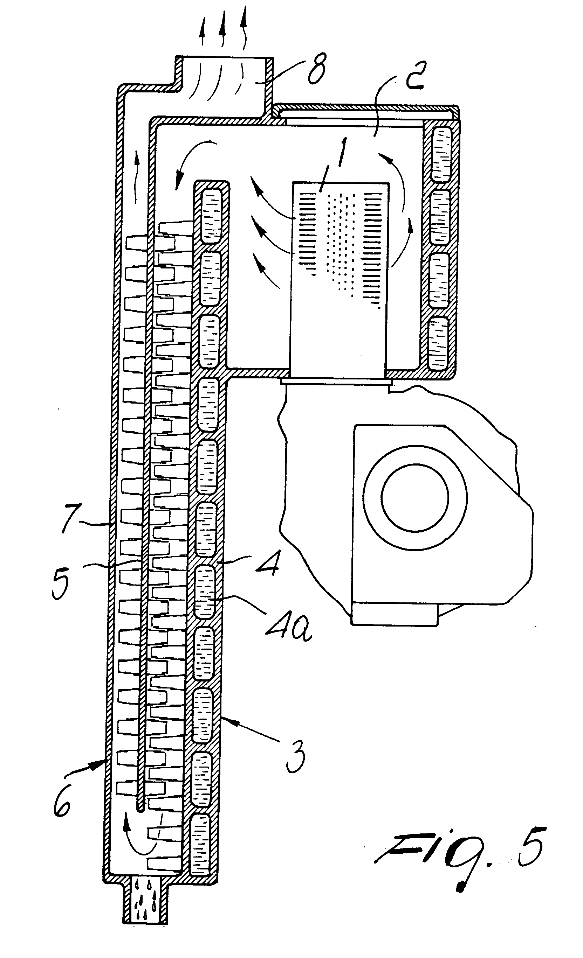

With reference to Figures 1, 4 and 5, the reference numeral 1 designates the burner of the boiler contained within a combustion chamber 2, and the reference numeral 3 generally designates a gas-water surface heat exchanger, which is delimited on one side by a wall 4, which comprises ducts such as 4a for the water to be heated, which enters cold from a connector 4b and is designed to exit, after being heated, through a connector 4c, and on the other side by a wall 5; those walls have, in a known manner, protrusions that activate heat exchange.

Furthermore the reference numeral 6 generally designates a heat exchanger, for example a surface heat exchanger, which is delimited by said wall 5 and by a wall 7.

The gases produced by the combustion in the burner 1 exit from the combustion chamber 2 and enter the exchanger 3, transferring their sensible heat to the water contained in the ducts 4a; in the final portion of the exchanger, part of the water vapor contained in the gases also condenses, and so part of the latent heat of the water vapor is also transferred to the water to be heated.

Thus, at the exit from the exchanger 3, the gases are at a temperature below the dew point and are therefore introduced in the heat exchanger 6 so as to encounter in countercurrent the gases that flow through the exchanger 3 and receive from them additional heat.

Accordingly, the gases that exit from the boiler through the duct 8 have a temperature that is well above the dew point and is such as to avoid any condensation along the flue.

The further embodiment of the invention shown schematically in Figure 2 provides for the presence of a mixing heat exchanger 9, in which the gases which are generated by the burner 1 in the combustion chamber 2 and arrive from the gas-water exchanger 3 at a temperature below the dew point are mixed with a fraction of gases at high temperature taken at the output of the combustion chamber 2 by way of the duct 10; this produces an increase in the temperature of the gases that flow toward the flue by way of the duct 11 which brings them well beyond the dew point.

Figure 3 is a view of another embodiment of the invention which comprises a surface heat exchanger 12, in which the gases that exit from the gas-water exchanger 3 and are conveyed by the duct 13 receive heat from the high-temperature gases generated by the burner 1 at the output of the combustion chamber 2, so as to flow toward the flue by means of the duct 14 at a temperature above the dew point.

The described invention is susceptible of numerous other modifications and variations, all of which are within the scope of the appended claims; all the details may further be replaced with other technically equivalent elements.

The disclosures in Italian Patent Application No. MN2002A000001 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A condensing boiler for home system, comprising a burner (1) contained in a combustion chamber (2) and a gas-water heat exchanger (3) in which heat is transferred to the water of the system by the gases, so that said gases reach a temperature below the dew point, **characterized in that** it comprises means (6; 9) adapted to heat the gases at the exit of the gas-water exchanger (3), before sending them to the flue, so as to return said gases to a temperature above the dew point.

2. The boiler according to claim 1, **characterized in that** the means (6) adapted to heat the gases at the exit of the gas-water exchanger comprise a surface heat exchanger (6) in which said gases receive heat from said gases at high temperature.

3. The boiler according to claim 1, **characterized in that** the means (6) adapted to heat the gases at the exit of the gas-water exchanger comprise a surface heat exchanger in which said gases encounter in countercurrent the gases during their flow within the gas-water exchanger (3).

4. The boiler according to claim 1, **characterized in that** the means adapted to heat the gases at the exit of the gas-water exchanger comprise a surface heat exchanger (6), in which said gases encounter the gases that exit from the combustion chamber (2).

5. The boiler according to claim 1, **characterized in that** the means adapted to heat the gases at the exit of the gas-water exchanger comprise a mixing heat exchanger (9), in which said gases are mixed with a suitable fraction of gases at high temperature taken at the output of the combustion chamber (2).
